# EUROPÄISCHE PATENTSCHRIFT

(11) **EP 2 189 052 B1**
(45) Veröffentlichungstag und Bekanntmachung des Hinweises auf die Patenterteilung: **07.03.2012**
(21) Anmeldenummer: 09013577.3
(22) Anmeldetag: 28.10.2009
(51) Int. Cl.: A01D 75/30, A01D 34/66, A01D 57/20

(54) **Mähmaschine sowie Verfahren zur Schwaderzeugung beim Mähen eines Feldes**
Mower and method for creating of swath when mowing a field
Faucheuse et procédé de production d'andain lors du fauchage d'un champ

(30) Priorität: 20.11.2008 DE 102008058281
(43) Veröffentlichungstag der Anmeldung: 26.05.2010
(73) Patentinhaber: Alois Pöttinger Maschinenfabrik Ges. m.b.H., 4710 Grieskirchen (AT)
(72) Erfinder: Lehner, Josef, Dipl.-Ing., 4732 St. Thomas (AT); Greifeneder, August, Ing., 4707 Schlüßlberg (AT)
(74) Vertreter: Thoma, Michael

(56) Entgegenhaltungen:
- EP-A- 1 106 051
- EP-A- 1 306 000
- EP-A- 1 321 022

## Beschreibung

Die vorliegende Erfindung betrifft eine Mähmaschine, mit einer mittleren sowie zwei seitlichen Mähwerkseinheiten, sowie zwei den seitlichen Mähwerkseinheiten zugeordneten Schwadformern zum Ablegen des von den seitlichen Mähwerkseinheiten gemähten Ernteguts quer zur Fahrspur der seitlichen Mähwerkseinheiten versetzt. Die Erfindung betrifft ferner ein Verfahren zur Schwaderzeugung beim Mähen eines Feldes, bei dem das Feld in vorzugsweise mäanderförmigen Bahnen mittels einer Mähmaschine umfassend zumindest drei in verschiedenen Fahrspuren laufenden, einander ergänzenden Mähwerkseinheiten abgemäht wird, wobei das von den beiden seitlichen Mähwerkseinheiten gemähte Erntegut zumindest teilweise mittels Schwadformern quer zu den Fahrspuren der seitlichen Mähwerkseinheiten versetzt abgelegt wird.

Beim Mähen eines Feldes mit einer Mähmaschine, die drei Mähwerkseinheiten umfasst, von denen die mittlere üblicherweise frontseitig am Schlepper angebaut ist und die beiden seitlichen üblicherweise heckseitig am Schlepper angebaut sind, ist es bekannt, den beiden seitlichen Mähwerkseinheiten Schwadformer nachzuordnen, die das von den seitlichen Mähwerkseinheiten gemähte Erntegut quer nach innen befördern und auf dem bzw. an dem mittleren Schwad, der von der mittleren Mähwerkseinheit abgelegt wird, zusammenliegen, so dass ein großer Dreierschwad erzeugt wird. Ein solcher einziger Dreierschwad ermöglicht ein sehr effizientes Aufnehmen des Ernteguts in einem nachfolgenden Arbeitsschritt beispielsweise durch einen Ladewagen, da die gesamte Schnittbreite einer Dreiermähwerkskombination zu einem einzigen Schwad zusammengelegt ist und nur eine einzige Bahn mit dem Ladewagen gefahren werden muss, um das über die gesamte Schnittbreite der Mähmaschine geschnittene Erntegut aufzunehmen.

Mit den immer breiter werdenden Schnittbreiten der einzelnen Mähwerkseinheiten wird der durch das Zusammenlegen des gesamten geschnittenen Ernteguts auf einen einzigen Schwad dieser Schwad jedoch sehr groß und voluminös, so dass die Ladewagen beim Aufnehmen eines solchen dicken und voluminösen Schwads an die Aufnahmekapazität der Pick-up des Ladewagens stoßen. Zwar werden auch die Ladewagen mit immer leistungsfähigeren und breiteren Pick-ups ausgerüstet, allerdings steht nicht in jedem Betrieb zu jeder Zeit der passende Ladewagen bereit, so dass es schön wäre, das von einer solchermaßen leistungsfähigen Mähwerkskombination gemähte Erntegut auch mit leistungsschwächeren Ladewagen aufnehmen zu können.

Eine Dreiermähwerkskombination, bei der den beiden seitlichen Mähwerkseinheiten jeweils ein Schwadformer in Form von Querförderbändern zugeordnet sind, die das von den seitlichen Mähwerkseinheiten gemähte Erntegut auf den mittleren Schwad der mittleren Mähwerkseinheit zusammenlegen, ist beispielsweise aus der DE 202 04 398 U1 bekannt.

Aus der EP 13 21 022 A1 ist ein Verfahren zur Schwaderzeugung beim Mähen eines Feldes nach dem Oberbegriff des Anspruchs 1 bekannt. Hierbei werden mittels einer Dreiermähwerkskombination Zweierschwaden erzeugt, indem die beiden heckseitigen Mähwerke das gemähte Erntegut zur selben Seite hin querversetzt ablegen, wodurch eine der beiden heckseitigen Mähwerkseinheiten zusammen mit dem Frontmähwerk in einem Zweierschwad ablegt und das andere heckseitige Mähwerk zunächst in einem Einerschwad ablegt. Beim entgegengesetzten Befahren der benachbarten Mähbahn legt das Mähwerk wiederum in der genannten Weise in einem Zweierschwad sowie einem Einerschwad ab, wobei Letzterer mit dem zuvor schon abgelegten Einerschwad zu einem Zweierschwad zusammengelegt wird.

Ferner beschreibt die Schrift EP 13 06 000 eine Mähwerkskombination mit drei Mähwerken, die an einen Schlepper anbaubar sind und jeweils eine Querfördereinrichtung aufweisen. Die Mähwerke können zusammen mit den Querförderern hierbei einzeln angehoben werden.

Der Erfindung liegt hiervon ausgehend die Aufgabe zugrunde, eine verbesserte Mähmaschine sowie ein verbessertes Verfahren der eingangs genannten Art zu schaffen, die Nachteile des Standes der Technik vermeiden und Letzteren in vorteilhafter Weise weiterbilden. Insbesondere soll es unter Beibehaltung des Mähvorgangs mit einer sehr leistungsfähigen Dreiermähwerkskombination großer Schnittbreite ermöglicht werden, das Aufsammeln des von der Mähwerkskombination abgelegten Ernteguts ohne weitere Zwischenschritte auch mit leistungsschwächeren Ladewagen bewerkstelligen zu können.

Erfindungsgemäß wird diese Aufgabe durch ein Verfahren gemäß Anspruch 1 sowie eine Mähmaschine gemäß Anspruch 2 gelöst. Bevorzugte Ausgestaltungen der Erfindung sind Gegenstand der abhängigen Ansprüche.

Es wird also vorgeschlagen, bei Bedarf, d.h. wenn mit einem schwächeren Ladewagen eingesammelt werden soll, das von der Mähwerkskombination geschnittene Erntegut nicht in einem einzigen Dreierschwad abzulegen, sondern auf zwei Zweierschwade aufzuteilen. Mit einem Zweierschwad ist hierbei ein Schwad gemeint, der das von zwei Mähwerkseinheiten gemähte Erntegut umfasst. Diese für eine Dreiermähwerkskombination auf den ersten Blick überraschende Schwadaufteilung - mit drei Mähwerkseinheiten werden zwei Schwade erzeugt - kann insbesondere dadurch erreicht werden, dass auf jeder Mähbahn ein Zweierschwad und ein Einerschwad abgelegt werden, wobei beim Mähen der benachbarten Bahn der dabei wieder erzeugte Einerschwad mit dem zuvor erzeugten Einerschwad der benachbarten Bahn zusammengelegt wird. Erfindungsgemäß ist hierzu vorgesehen, dass beim Mähen einer ersten von zwei benachbarten Bahnen das von einer der beiden seitlichen Mähwerkseinheiten gemähte Erntegut mit dem von der mittleren Mähwerkseinheit gemähten Erntegut zu einem Zweierschwad zusammengelegt und das von der anderen seitlichen Mähwerkseinheit gemähte Erntegut in einem separaten Einerschwad abgelegt wird, und beim Mähen der zweiten von zwei benachbarten Bahnen das von einer der beiden seitlichen Mähwerkseinheiten gemähte Erntegut wiederum mit dem von der mittleren Mähwerkseinheit gemähten Erntegut zu einem zweiten Zweierschwad zusammengelegt und das von der anderen seitlichen Mähwerkseinheit gemähte Erntegut mit dem separaten Einerschwad der ersten Bahn zu einem dritten Zweierschwad zusammengelegt wird. Es werden also beim Mähen zweier benachbarter Bahnen insgesamt drei Zweierschwade abgelegt. Hierdurch wird immer noch ein effizientes Einsammeln gewährleistet, da trotz der großen Breite von insgesamt sechs Mähwerksfahrspuren auf zwei Mähbahnen nur drei Schwade eingesammelt werden müssen. Dennoch ist andererseits gewährleistet, dass die einzelnen Schwade nicht zu voluminös werden, wodurch das Einsammeln auch mit einem kleineren Ladewagen mit weniger breiter Pick-up gewährleistet ist.

Erfindungsgemäß werden die Zweierschwade durch Deaktivierung des Schwadformers einer der seitlichen Mähwerkseinheiten auf jeder zweiten Mähbahn erzeugt. Das von der separat ablegenden seitlichen Mähwerkseinheit gemähte Erntegut wird auf einer der zwei benachbarten Bahnen durch Wegbewegen des Schwadformers in der Spur der genannten seitlichen Mähwerkseinheit abgelegt. Beim Mähen der benachbarten Bahn wird der Schwadformer in der Aktivstellung betrieben, so dass beide seitliche Mähwerkseinheiten mit Schwadformern arbeiten, wobei die wiederum in einem separaten Schwad ablegende Mähwerkseinheit durch den zugeordneten Schwadformer den Schwad quer versetzt ablegt, so dass er mit dem zuvor bereits erzeugten Einerschwad zu einem Zweierschwad zusammengelegt wird.

Es wird also der jeweils separat abgelegte Einerschwad einmal in der Spur des jeweiligen seitlichen Mähwerks und einmal hierzu quer versetzt abgelegt. Vorteilhafterweise erfolgt hierbei das quer versetzte Ablegen des Einerschwads mittels des in der Arbeitsstellung befindlichen Schwadformers beim Mähen der zweiten, benachbarten Bahn, da hierdurch beim Mähen der ersten von zwei benachbarten Bahnen das separat in einem Einerschwad abgelegte Erntegut nicht in das noch ungemähte Erntegut der benachbarten zweiten Bahn gefördert wird.

Grundsätzlich kann das Abfahren der Bahnen in verschiedenen Mustern erfolgen, beispielsweise können zwei benachbarte Bahnen in derselben Richtung abgefahren werden. Um jedoch das Zusammenlegen des mittleren Schwads und eines seitlichen Schwads immer von derselben seitlichen Mähwerkseinheit aus bewerkstelligen zu können und an immer nur derselben seitlichen Mähwerkseinheit den Schwadformer zwischen seiner Aktivstellung und seiner Nichtarbeitsstellung hin- und herbewegen zu müssen, ist in vorteilhafter Weiterbildung der Erfindung vorgesehen, dass zwei benachbarte Bahnen, bei denen die von der separat ablegenden seitlichen Mähwerkseinheit erzeugten Schwade zu einem Zweierschwad zusammengelegt werden, in entgegengesetzter Richtung gemäht werden. Dies kann vorteilhafterweise durch eine Bearbeitung des Felds in mäanderförmigen Bahnen erreicht werden.

Die Mähmaschine, mittels derer in vorteilhafter Weise das genannte Verfahren durchgeführt werden kann, zeichnet sich in erfindungsgemäßer Weise dadurch aus, dass zumindest einer der Schwadformer, die den beiden seitlichen Mähwerkseinheiten zugeordnet sind, unabhängig von der Stellung des anderen Schwadformers zwischen einer Arbeitsstellung und einer inaktiven Passivstellung hin- und herverstellbar ausgebildet ist. Insbesondere ist vorgesehen, dass auch dann, wenn der genannte andere Schwadformer permanent in seiner Arbeitsstellung bleibt, der genannte eine Schwadformer zyklisch in Abhängigkeit der befahrenen Bahnen von seiner Arbeitsstellung in seiner inaktive Passivstellung und zurück hin- und herbewegt wird.

Die Mähmaschine umfasst eine Steuervorrichtung zur Verstellung des genannten einen Schwadformers in dessen Passivstellung in Abhängigkeit der befahrenen Mähbahnen. Die Steuervorrichtung ist hierbei derart ausgebildet, dass beim Befahren einer ersten von zwei benachbarten Bahnen der Schwadformer in seine Passivstellung gefahren wird und beim Befahren der zweiten von zwei benachbarten Bahnen der Schwadformer in seine Arbeitsstellung gefahren wird, in der das von dem zugehörigen seitlichen Mähwerk geschnittene Erntegut quer zu dessen Spur versetzt abgelegt wird.

Die Steuerung der Verstellung des genannten einen Schwadformers erfolgt durch die Steuervorrichtung, die eine Erfassungseinrichtung in Form einer geeigneten Sensorik umfasst, die eine dem einzeln verstellbaren Schwadformer benachbarte Fahrbahn daraufhin erfassen, ob dort ein zuvor abgelegter Einerschwad

liegt oder noch ungeschnittenes Erntegut steht. In Abhängigkeit des Erfassungsergebnisses wird der genannte Schwadformer aktiviert bzw. deaktiviert, um das vom zugehörigen seitlichen Mähwerk gemähte Erntegut quer versetzt mit dem zuvor auf der benachbarten Bahn separat abgelegten Einerschwad zusammenzulegen oder separat in einem neuen Einerschwad abzulegen.

Der Schwadformer kann hierbei grundsätzlich verschieden ausgebildet sein. Vorteilhafterweise umfasst er einen Querförderer vorzugsweise in Form eines Querförderbands, mittels dessen das Erntegut in der gewünschten Weise quer zur Fahrspur des zugehörigen Mähwerks versetzt abgelegt werden kann.

In vorteilhafter Weiterbildung der Erfindung ist der Querförderer des einzeln verstellbaren Schwadformers hierbei mit einem richtungsumkehrbaren Antrieb versehen, so dass in der Arbeitsstellung des Schwadformers das von der zugehörigen Mähwerkseinheit geschnittene Erntegut wahlweise zu gegenüberliegenden Seiten hin quer zur Fahrspur der genannten Mähwerkseinheit versetzt abgelegt werden kann. Dies ermöglicht es, wahlweise das von allen drei Mähwerkseinheiten gemähte Erntegut in einem einzigen Dreierschwad abzulegen, oder in der genannten Weise beim Mähen zweier benachbarter Bahnen drei Zweierschwade zu erzeugen.

Die Schwadformer können in grundsätzlich verschiedener Weise den seitlichen Mähwerkseinheiten zugeordnet sein. In vorteilhafter Weiterbildung der Erfindung können die Schwadformer mit jeweils einer seitlichen Mähwerkseinheit zusammen an jeweils einem gemeinsamen Tragarm aufgehängt sein, der um eine vorzugsweise liegende, in Fahrtrichtung weisende Schwenkachse an einem Tragrahmen der Mähmaschine angelenkt ist und mittels eine Hubantriebs nach oben geschwenkt werden kann. Hierdurch können die seitlichen Mähwerkseinheiten zusammen mit den zugehörigen Schwadformern ohne separate Hubantriebe für Mähwerkseinheit und Schwadformer in eine angehobene Vorgewende- und/oder Transportstellung bewegt werden.

Die separate Verstellbarkeit zumindest eines Schwadformers kann in vorteilhafter Weiterbildung der Erfindung dadurch erreicht werden, dass der zumindest eine Schwadformer relativ zu der zugehörigen seitlichen Mähwerkseinheit um eine vorzugsweise liegende, quer zur Fahrtrichtung ausgerichtete Schwenkachse schwenkbar gelagert und mittels eines Hubschwenkantriebs nach oben weggefahren werden kann. Die Ausrichtung der Schwenkachse kann ggf. auch parallel zur Fahrtrichtung vorgesehen sein, wobei ggf. auch eine geneigte Schwenkachsenanordnung denkbar ist, wodurch ein sozusagen schräges Wegschwenken ermöglicht wird. Alternativ oder zusätzlich kann auch eine Parallelogrammlenkeraufhängung für den Schwadformer vorgesehen sein, so dass dieser nicht mit einer reinen Schwenkbewegung, sondern mit einer nur geringen oder auch gar keiner Rotationskomponente nach oben bewegt werden kann, um aus dem Ablagebereich der zugehörigen Mähwerkseinheit herausbewegt werden zu können.

Die Erfindung wird nachfolgend anhand eines bevorzugten Ausführungsbeispiels und zugehörigen Zeichnungen näher erläutert. In den Zeichnungen zeigen:
- Fig. 1:: eine schematische Draufsicht auf die Dreiermähwerkskombination nach einer vorteilhaften Ausführung der Erfindung, gemäß der eine mittlere Mähwerkseinheit an einem Schlepper frontseitig und zwei seitliche Mäh- werkseinheiten heckseitig an dem Schlepper angebaut sind,
- Fig. 2:: eine ausschnittsweise, vergrößerte Draufsicht auf die beiden seitlichen Mähwerkseinheiten, wobei die diesen Mähwerkseinheiten zugeordneten Schwadformer in Form von Querförderbändern jeweils in ihrer aktiven Arbeitsstellung gezeigt sind,
- Fig. 3:: eine Seitenansicht der seitlichen Mähwerkseinheiten und den diesen zugeordneten Querförderbändern aus Fig. 2,
- Fig. 4:: eine Draufsicht auf die seitlichen Mähwerkseinheiten ähnlich Fig. 2, wo- bei eines der Querförderbänder in seine nach oben geschwenkte inakti- ve Passivstellung bewegt wurde,
- Fig. 5:: eine Seitenansicht der seitlichen Mähwerkseinheiten aus Fig. 4, die ei- nen der Querförderer in der Arbeitsstellung und einen der Querförderer in der inaktiven Passivstellung zeigt, und
- Fig. 6:: eine schematische Darstellung des Mähvorgangs zweier benachbarten Mähbahnen zur Verdeutlichung der Erzeugung von drei Zweierschwade beim Mähen zweier benachbarter Bahnen.

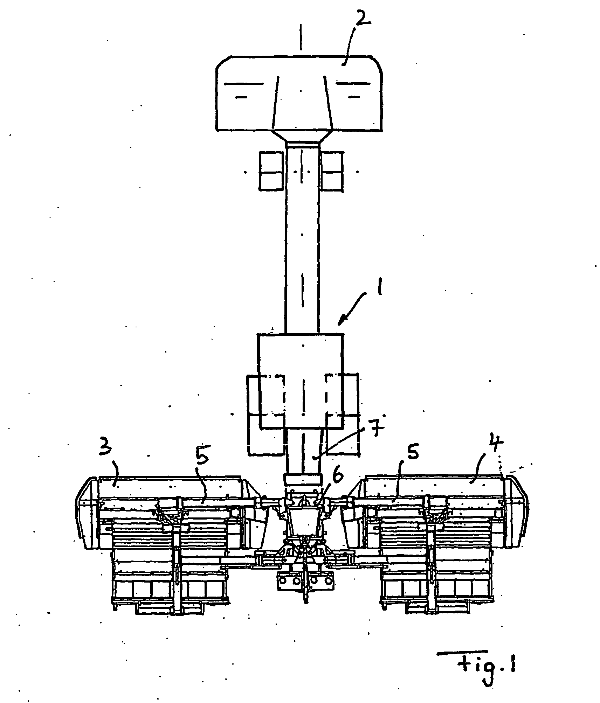

Fig. 1 zeigt einen Schlepper 1, an den frontseitig eine mittlere Mähwerkseinheit 2 sowie heckseitig zwei seitliche Mähwerkseinheiten 3 und 4 angebaut sind. Ggf. kann die Mähmaschine jedoch sozusagen auch umgekehrt angeordnet sein oder in anderer Konfiguration zusammengestellt sein, beispielsweise dergestalt, dass alle drei Mähwerkseinheiten fronseitig an dem Schlepper 1 bzw. bei einem Schlepper mit umdrehbarer Führerkabine heckseitig angeordnet sind.

Die genannten Mähwerkseinheiten 2, 3 und 4 ergänzen sich hierbei in an sich bekannter Weise derart, dass sich die Mähbreiten zu einer Gesamtschnittbreite der Maschine ergänzen.

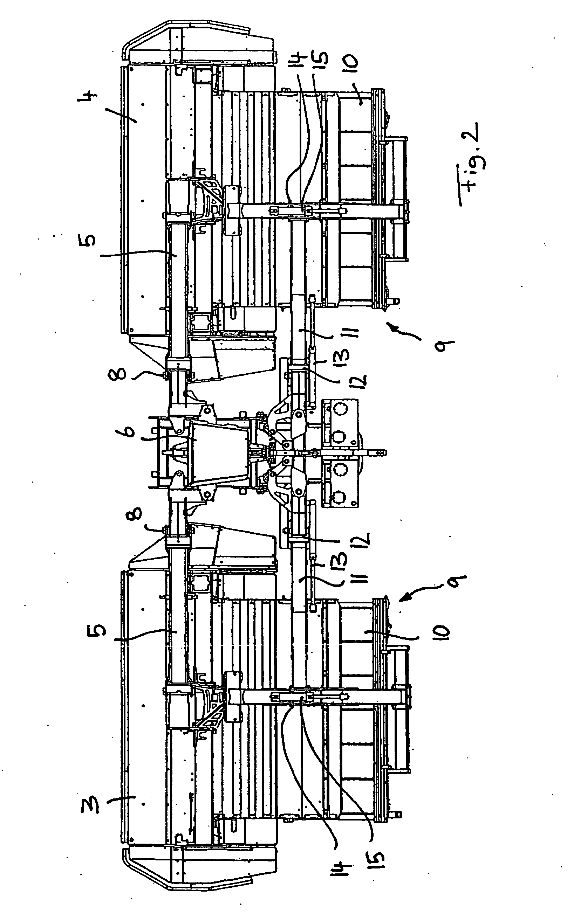

Wie Fig. 2 zeigt, sind die beiden seitlichen Mähwerkseinheiten 3 und 4 mittels seitlich auskragender Tragarme 5 an einem Anbaurahmen 6 befestigt, der mittig hinter dem Schlepper 1 angeordnet und an diesem mittels einer Dreipunktanlenkung 7 befestigt ist. Die genannten Tragarme 5 können um liegende Schwenkachsen mittels eines Hubantriebs vorzugsweise in Form eines Hydraulikzylinders nach oben geschwenkt werden, um die Mähwerkseinheiten 3 und 4 in die Transportstellung zu bringen.

Hinter den beiden seitlichen Mähwerkseinheiten 3 und 4 sind zwei Schwadformer 9 angeordnet, die jeweils einen Querförderer 10 umfassen, der in der gezeichneten Ausführungsform als Querförderband ausgebildet ist. Die genannten Querförderer 10 sind hierbei in ihrer Arbeitsstellung im Ablagebereich bzw. Auswurfbereich der Mähwerkseinheiten 3 und 4 angeordnet, so dass das von den Mähwerkseinheiten 3 und 4 ausgeworfene Schnittgut auf die Querförderer 10 gelangt und von diesen zur Fahrspur der jeweiligen Mähwerkseinheit 2 versetzt abgelegt werden kann.

Die genannten Querförderer 10 besitzen hierbei vorteilhafterweise richtungsumkehrbare Förderantriebe, so dass das Erntegut wahlweise jeweils rechts oder links zur Fahrspur der zugehörigen Mähwerkeinheit 2 abgelegt werden kann.

Die beiden Schwadformer 9 sind hierbei jeweils an seitlich auskragenden Tragarmen 11 aufgehängt, die an dem genannten zentralen Anbaurahmen 6 befestigt sind. Die genannten Tragarme 11 können hierbei vorteilhafterweise um liegende, in Fahrtrichtung weisende Schwenkachsen 12 nach oben geschwenkt werden, um auch die Schwadformer 9 in entsprechende Transportstellungen verbringen zu können. Hierzu sind den genannten Tragarmen 11 Hubschwenkantriebe zugeordnet, die in der gezeichneten Ausführung in Form von Hydraulikzylindern 13 ausgebildet sind.

Vorteilhafterweise erstrecken sich die Schwenkachsen 12 der Schwadformer-Tragarme 11 sowie die Schwenkachsen 8 der Mähwerkstragarme 5 koaxial zueinander, so dass beide Aggregate zusammen in die Vorgewendestellung bzw. Transportstellung nach oben geschwenkt werden können.

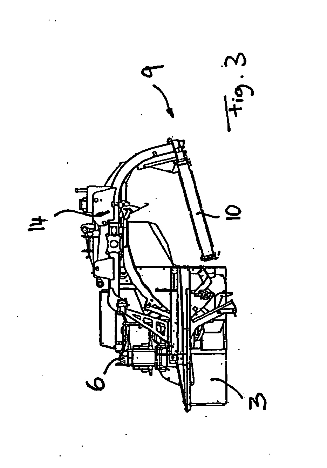

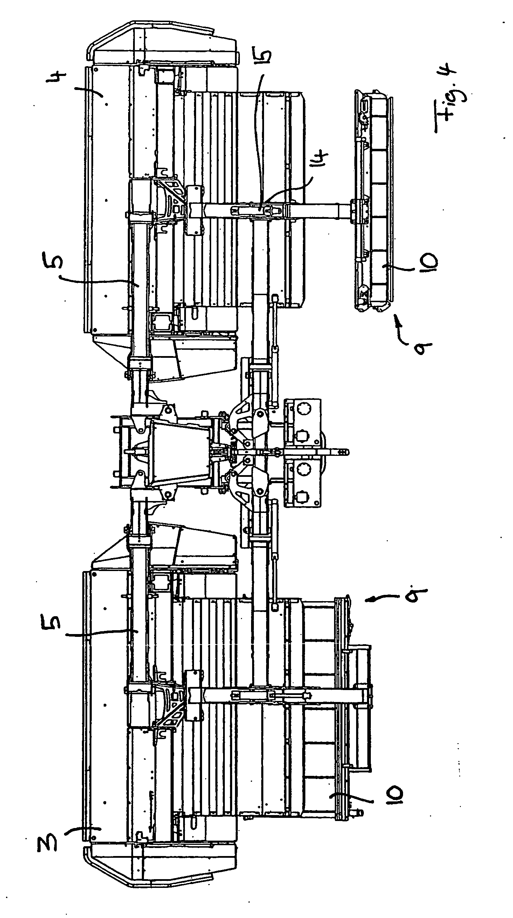

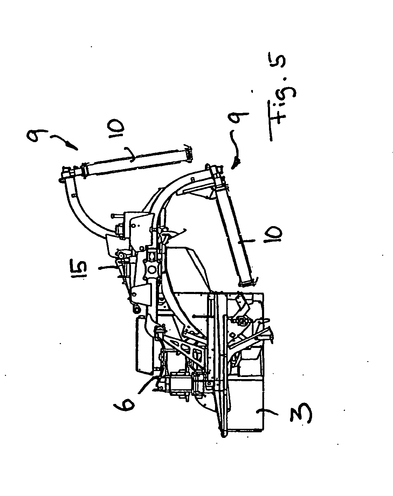

Zusätzlich zu der genannten Beweglichkeit durch Verschwenken der Tragarme 11 sind die Schwadformer 9 mit einem weiteren Freiheitsgrad gelagert. In der gezeichneten Ausführungsform ist jeder der Schwadformer 9 bzw. Querförderer 10 an den Tragarmen 11 beweglich aufgehängt, so dass der Schwadformer 9 bzw. Querförderer 10 jeweils aus der in den Figuren 2 und 3 gezeigten Arbeitsstellung in die in den Figuren 4 und 5 gezeigte nichtaktive Passivstellung und zurück bewegt werden kann. In der besagten Passivstellung ist der Schwadformer 9 bzw. Querförderer 10 aus dem Abwurfbereich der zugehörigen Mähwerkseinheit 2 herausbewegt.

In der gezeichneten Ausführung sind die Schwadformer 9 bzw. die Querförderer 10 schwenkbar an den Tragarmen 11 aufgehängt, und zwar um eine liegende, sich quer zur Fahrtrichtung bzw. sich parallel zur Längsachse des jeweiligen Tragarms 11 erstreckende Schwenkachse 14, vgl. Figuren 2 bis 5. Um die genannte Schwenkachse 14 kann der jeweilige Schwadformer 9 aus der in den Figuren 2 und 3 gezeigten Stellung nach oben in die in den Figuren 4 und 5 gezeigte Passivstellung geschwenkt werden bzw. umgekehrt wieder heruntergeschwenkt werden.

Die Schwadformer 9 sind hierbei mittels separat ansteuerbarer Stellantriebe 15 unabhängig voneinander verlagerbar, d.h. es kann bei Belassen des einen Schwadformers 9 in der Arbeitsstellung der andere Schwadformer beliebig zwischen Arbeitsstellung und Passivstellung hin- und herbewegt werden.

In der gezeichneten Ausführungsform umfassen die genannten Stellantriebe 15 Druckmittelzylinder 16, die in geeigneter Weise von einer Steuervorrichtung angesteuert werden.

Durch die unabhängig Verstellbarkeit der Schwadformer 9 und deren umkehrbare Förderantriebe lässt sich die Mähwerkskombination in verschiedenen Betriebsmodi betreiben. Sind, wie in den Figuren 2 und 3 gezeigt, beide Schwadformer 9 in ihrer Arbeitsstellung und werden die genannten Querförderer 10 gegenläufig zueinander, jeweils nach innen hin angetrieben, wird das von den drei Mähwerkseinheiten 2, 3 und 4 geschnittene Erntegut in einem einzigen Dreierschwad im Wesentlichen in der Fahrspur der mittleren Mähwerkseinheit 2 abgelegt.

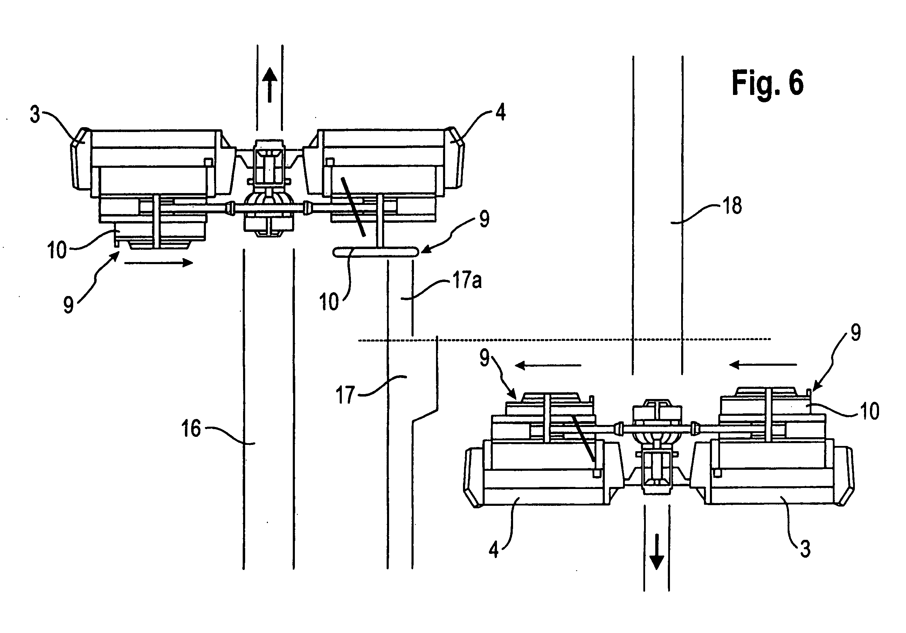

Andererseits kann die Mähwerkskombination auch Zweierschwade ablegen, so wie dies Fig. 6 verdeutlicht. Hierzu wird einer der Querförderer 10 auf jeder ersten von zwei benachbarten Bahnen weggeschwenkt und auf jeder zweiten von zwei benachbarten Bahnen in die Arbeitsstellung geschwenkt und dabei in umgekehrter Förderrichtung betrieben. Insbesondere wird, wie die linke Hälfte der Darstellung der Fig. 6 zeigt, mit der Mähwerkskombination beim Mähen einer ersten Bahn zunächst ein Zweierschwad und ein Einerschwad abgelegt. Hierzu wird der Querförderer 10 der gemäß Fig. 6 linken seitlichen Mähwerkseinheit 3 in der Arbeitsstellung betrieben, wobei der Querförderer 10 derart angetrieben ist, dass das von dieser Mähwerkseinheit 3 geschnittene Erntegut mit dem Erntegut der mittleren Mähwerkseinheit 2 zu einem ersten Zweierschwad 16 zusammengelegt wird. Die gemäß Fig. 6 rechte seitliche Mähwerkseinheit 4 legt indes einen separaten Einerschwad 17A ab. Hierzu ist der dieser Mähwerkseinheit 4 zugeordnete Querförderer 10 in seine inaktive Passivstellung geschwenkt.

Wird sodann die benachbarte Erntegutbahn in entgegengesetzter Richtung befahren, wird wiederum das geschnittene Erntegut der mittleren Mähwerkseinheit 2 sowie der linken seitlichen Mähwerkseinheit 3 zu einem gemeinsamen, zweiten Zweierschwad 18 abgelegt, vgl. Fig. 6. Von der anderen, rechten seitlichen Mähwerkseinheit 4 wird wiederum ein separater Einerschwad abgelegt. Dieser Einerschwad wird diesmal jedoch von dem in der abgesenkten Arbeitsstellung betriebenen Querförderer 10 seitlich quer versetzt zur Fahrspur der Mähwerkseinheit 4 abgelegt und insbesondere mit dem zuvor separat abgelegten Einerschwad 17A zu einem dritten Zweierschwad 17 zusammengelegt.

## Patentansprüche

1. Verfahren zur Schwaderzeugung beim Mähen eines Feldes, bei dem das Feld in vorzugsweise mäanderförmigen Bahnen mittels einer Mähmaschine umfassend drei in verschiedenen Fahrspuren laufenden, einander ergänzenden Mähwerkseinheiten (2, 3, 4) abgemäht wird, wobei das von den beiden seitlichen Mähwerkseinheiten (3, 4) gemähte Erntegut zumindest teilweise mittels Schwadformern (9) quer zu den Fahrspuren der seitlichen Mähwerkseinheiten (3, 4) versetzt abgelegt wird, wobei beim Mähen einer ersten von zwei benachbarten Bahnen das von einer der beiden seitlichen Mähwerkseinheiten (3) gemähte Erntegut mit dem von der mittleren Mähwerkseinheit (2) gemähten Erntegut zu einem ersten Zweierschwad (16) zusammengelegt und das von der anderen seitlichen Mähwerkseinheit (4) gemähte Erntegut in einem separaten Einerschwad (17A) abgelegt wird, und beim Mähen der zweiten von zwei benachbarten Bahnen das von einer der beiden seitlichen Mähwerkseinheiten (3) gemähte Erntegut mit dem von der mittleren Mähwerkseinheit (2) gemähten Erntegut zu einem zweiten Zweierschwad (18) zusammengelegt und das von der anderen seitlichen Mähwerkseinheit (4) gemähte Erntegut mit dem separaten Einerschwad (17A) der ersten Bahn zu einem dritten Zweierschwad (17) zusammengelegt wird, **dadurch gekennzeichnet, dass** der dritte Zweierschwad (17) durch Wegbewegen des Schwadformers (9) einer der seitlichen Mähwerkseinheiten (4) auf je einer von zwei benachbarten Mähbahnen erzeugt wird, wobei von einer Erfassungseinrichtung eine zu dem einzeln verstellbaren Schwadformer (9) benachbarte Fahrbahn daraufhin erfaßt wird, ob auf dieser benachbarten Fahrbahn ein zuvor abgelegter Einerschwad (17A) oder noch ungemähtes Erntegut liegt, und in Abhängigkeit des Erfassungsergebnisses der genannte Schadformer (9) wegbewegt oder in Arbeitstellung bewegt wird derart, daß das von der separat ablegenden, seitlichen Mähwerkseinheit (4) gemähte Erntegut auf einer ersten der zwei Bahnen durch Wegbewegen des zugehörigen Schwadformers (9) in der Spur der genannten seitlichen Mähwerkseinheit (4) abgelegt und auf der zweiten der zwei Bahnen durch den Schwadformer (9) in dessen Arbeitsstellung spurversetzt abgelegt wird.

2. Mähmaschine zur Durchführung des Verfahrens nach Anspruch 1, mit einer mittleren sowie zwei seitlichen Mähwerkseinheiten (2; 3, 4), sowie zwei den seitlichen Mähwerkseinheiten (3, 4) zugeordneten Schwadformern (9) zum Ablegen des von den seitlichen Mähwerkseinheiten (3, 4) gemähten Ernteguts quer zu den Fahrspuren der seitlichen Mähwerke (3, 4) versetzt, **dadurch gekennzeichnet, dass** zumindest einer der Schwadformer (9) unabhängig von der Stellung des anderen Schwadformers (9) zwischen einer Arbeitsstellung und einer inaktiven Passivstellung relativ zu der zugehörigen, in Arbeitsstellung befindlichen Mähwerkseinheit (4) hin- und herverstellbar ausgebildet ist, wobei eine Steuervorrichtung zur Verstellung des genannten einen Schwadformers (9) relativ zur zugehörigen in Arbeitsstellung befindlichen Mähwerkseinheit (4) in die genannte Passivstellung auf jeder zweiten Mähbahn von zwei benachbarten Mähbahnen vorgesehen ist, wobei eine Erfassungseinrichtung zur Erfassung einer dem einzeln verstellbaren Schwadformer (9) benachbarten Fahrbahn daraufhin, ob auf dieser benachbarten Fahrbahn ein zuvor abgelegter Einerschwad (17A) oder noch ungemähtes Erntegut liegt, vorgesehen ist, und die Steuervorrichtung in Abhängigkeit des Erfassungsergebnisses den genannte Schwadformer (9) in die Passivstellung bewegt, wenn die Erfassungseinrichtung auf der genannten benachbarten Fahrgasse ungemähtes Erntegut erfaßt, und in die Arbeitsstellung bewegt, wenn die Erfassungseinrichtung auf der genannten benachbarten Fahrbahn einen zuvor abgelegten Einerschwad erfaßt.

3. Mähmaschine nach dem vorhergehenden Anspruch, wobei jedem der Schwadformer (9) ein separat ansteuerbarer Stellantrieb (15) zur Verstellung des jeweiligen Schwadformers zwischen Arbeitsstellung und Passivstellung zugeordnet ist.

4. Mähmaschine nach einem der Ansprüche 2 bis 3, wobei der zumindest eine unabhängig verstellbare Schwadformer (9) einen Querförderer (10) mit einem richtungsumkehrbaren Förderantrieb aufweist.

5. Mähmaschine nach einem der Ansprüche 2 bis 4, wobei die Schwadformer (9) an jeweils einem Tragarm (11) aufgehängt sind, der um eine liegende, in Fahrtrichtung weisende Schwenkachse (12) mittels eines Hubantriebs (13) nach oben in eine Vorgewende- und/oder Transportstellung schwenkbar ausgebildet ist.

6. Mähmaschine nach einem der Ansprüche 2 bis 5, wobei der zumindest eine unabhängig verstellbare Schwadformer (9) relativ zu dem zugehörigen seitlichen Mähwerk (4) um eine vorzugsweise liegende, quer zur Fahrtrichtung ausgerichtete Schwenkachse mittels eines Hubschwenkantriebs (15) nach oben wegfahrbar ausgebildet ist.

7. Mähmaschine nach Anspruch 4 und 5, wobei der zumindest eine Schwadformer (9) an dem Tragarm (11) um die Schwenkachse (12), die sich parallel zur Längsachse des Tragarms (11) erstreckt, schwenkbar an dem Tragarm (11) angelenkt ist.

## Claims

1. A method for producing swaths on the reaping of a field, wherein the field is reaped in preferably meandering tracks by means of a reaping machine including at least three cutter bar units (2, 3, 4) which run in different lanes and which mutually complement one another, wherein the harvest reaped by the two side cutter bar units (3, 4) is placed down at least partly by means of swath formers (9) offset transversely to the lanes of the side cutter bar units (3, 4), wherein, on the reaping of a first of two adjacent tracks, the harvest reaped by one of the two side cutter bar units (3) is combined with the harvest reaped by the middle cutter bar unit (2) to form a first double swath (16) and the harvest reaped by the other side cutter bar unit (4) is placed down in a separate single swath (17A) and, on the reaping of the second of two adjacent tracks, the harvest reaped by one of the two side cutter bar units (3) is combined with the harvest reaped by the middle cutter bar unit (2) to form a second double swath (18) and the harvest reaped by the other side cutting bar unit (4) is combined with the separate single swath (17A) of the first track to form a third double swath (17), **characterised in that** the third double swath (17) is produced by moving away the swath former (9) of one of the side cutting bar units (4) on a respective one of two adjacent reaping tracks, with a track adjacent to the individually adjustable track former (9) is detected by a detection device as to whether a previously placed down single swath (17A) or harvest still not reaped lies on this adjacent track, and the named swath former (9) is moved away or is moved into the working position in dependence on the detection result such that the harvest reaped by the separately placing down, side cutting bar unit (4) is placed down in a first track of the two tracks by moving away the associated swath former (9) in the lane of the named side cutting bar unit (4) and is placed down by the swath former (9) in its working position on the second of the two tracks offset by lane.

2. A reaping machine for carrying out the method in accordance with claim 1, comprising one middle and two side cutting bar units (2; 3, 4) and two swath formers (9) associated with the side cutter bar units (3, 4) for placing down the harvest reaped by the side cutter bar units (3, 4) transversely to the lanes of the side cutting bars (3, 4), **characterised in that** at least one of the swath formers (9) is designed adjustable to and fro relative to the associated cutter bar unit (4) located in the working position between a working position and an inactive position independently of the position of the other swath former (9), wherein a control apparatus is provided for adjusting the named one swath former (9) relative to the associated cutting bar unit (4) located in the working position into the named passive position on each second reaping track of two adjacent reaping tracks, wherein a detection device is provided for detecting a track adjacent to the individually adjustable swath former (9) as to whether a previously placed down single swath (17A) or harvest still not reaped lies on this adjacent track, and in dependence on the detection result the control apparatus moves the named swath former (9) into the passive position when the detection device detects non-reaped harvest on the named adjacent track and into the working position when the detection device detects a previously placed down single swath on the name adjacent track.

3. A reaping machine in accordance with the preceding claim, wherein a separately controllable actuating drive (15) for adjusting the respective swath former between the working position and the passive position is associated with each of the swath formers (9).

4. A reaping machine in accordance with one of the claims 2 to 3, wherein the at least one independently adjustable swath former (9) has a cross-conveyor (10) with a conveying drive reversible in direction.

5. A reaping machine in accordance with one of the claims 2 to 4, wherein the swath formers (9) are suspended at respectively one carrier arm (11) which is formed pivotably upwardly about a lying pivot axle (12) facing in the direction of travel into a headland position and/or transport position by means of a lifting drive (13).

6. A reaping machine in accordance with one of the claims 2 to 5, wherein the at least one independently adjustable swath former (9) is made movable away upwardly relative to the associated side cutting bar (4) about a preferably lying pivot axle aligned transversely to the direction of travel by means of a lifting pivot drive (15).

7. A reaping machine in accordance with claims 4 and 5, wherein the at least one swath former (9) at the carrier arm (11) is pivotably connected to the carrier arm (11) about the pivot axle (12) which extends parallel to the longitudinal axis of the carrier arm (11).

## Revendications

1. Procédé destiné à produire des andains lors du fauchage d'un champ, dans lequel le champ est fauché en bandes de préférence en forme de méandres au moyen d'une moissonneuse comprenant trois unités de faucheuse (2, 3, 4) roulant dans différentes traces de roulement et se complétant, le produit à récolter fauché par les deux unités de faucheuse latérales (3, 4) étant déposé au moins partiellement au moyen de formateurs d'andain (9) de façon décalée transversalement aux traces de roulement des unités latérales de faucheuse (3, 4), le produit à récolter fauché par l'une des deux unités latérales de faucheuse (3) étant assemblé, lors du fauchage d'une première de deux bandes voisines, avec le produit à récolter fauché par l'unité de faucheuse centrale (2) pour obtenir un premier double andain (16) et le produit à récolter fauché par l'autre unité de faucheuse (4) latérale étant déposé dans un andain simple (17A) séparé, et le produit à récolter fauché par l'une des deux unités de fauchage (3) latérales étant assemblé, lors du fauchage de la seconde de deux bandes voisines, avec le produit à récolter fauché par l'unité de fauchage (2) centrale pour former un second double andain (18) et le produit à récolter fauché par l'autre unité de fauchage (4) latérale étant assemblé avec l'andain unique séparé (17A) de la première bande pour former un troisième double andain (17), **caractérisé en ce que** le troisième double andain (17) est généré, en éloignant le formateur d'andain (9) d'une des unités de fauchage (4) latérales sur respectivement l'une de deux bandes de fauchage voisines, une bande de roulement, voisine du dispositif formateur d'andain (9) réglable individuellement étant détectée ensuite par un dispositif de détection pour savoir si l'on a sur cette bande de roulement voisine un andain unique (17A) déposé auparavant ou un produit à récolter encore non fauché, et ledit dispositif d'andain (9) étant éloigné en fonction du résultat de la détection ou déplacé dans la position de travail de telle sorte que le produit à récolter fauché par l'unité de fauchage déposant séparément et latérale (4) est déposé sur une première des deux bandes par l'éloignement du formateur d'andain (9) spécifique dans la trace de ladite unité de fauchage (4) latérale et est déposé sur la seconde des deux bandes par le formateur d'andain (9) dans sa position de travail de façon décalée au niveau de la trace.

2. Moissonneuse pour la mise en oeuvre du procédé selon la revendication 1, comprenant une unité de fauchage centrale et deux unités de fauchage (2; 3, 4) latérales ainsi que deux formateurs d'andain (9) associés aux unités de fauchage (3, 4) latérales pour la dépose du produit à récolter fauché par les unités de fauchage (3, 4) latérales, de façon décalée transversalement aux traces de roulement des faucheuses (3, 4) latérales, **caractérisée en ce qu'**au moins l'un des formateurs d'andain (9) est conçu de façon à être déplacé d'un côté et de l'autre, indépendamment de la position de l'autre formateur d'andain (9) entre une position de travail et une position passive inactive par rapport à l'unité de faucheuse (4) spécifique et se trouvant dans la position de travail, un dispositif de commande étant conçu pour le déplacement dudit un formateur d'andain (9) par rapport à l'unité de faucheuse (4) spécifique et se trouvant en position de travail dans ladite position passive sur une bande de fauchage de deux bandes de fauchage voisines, un dispositif de détection étant prévu pour la détection d'une bande de roulement voisine du formateur d'andain (9) réglable individuellement pour savoir si l'on a sur cette bande de roulement voisine un andain unique (17A) déposé auparavant ou du produit à récolter encore non fauché, et le dispositif de commande déplaçant ledit formateur d'andain (9) dans la position passive en fonction du résultat de la détection lorsque le dispositif de détection détecte du produit à récolter non fauché sur ladite voie voisine, et dans la position de travail lorsque le dispositif de détection détecte un andain unique déposé auparavant sur ladite bande de roulement voisine.

3. Moissonneuse selon la revendication précédente, un servomoteur (15) actionnable séparément destiné au déplacement du formateur d'andain respectif entre la position de travail et la position passive étant associé à chacun des formateurs d'andain (9).

4. Moissonneuse selon l'une quelconque des revendications 2 à 3, le au moins un formateur d'andain (9) réglable indépendamment présentant un transporteur transversal (10) avec un entraînement de transport réversible dans la direction.

5. Moissonneuse selon l'une des revendications 2 à 4, les formateurs d'andain (9) étant accrochés sur respectivement un bras porteur (11), lequel est conçu de façon à pouvoir pivoter autour d'un axe de basculement (12) horizontal, dirigé dans le sens de marche au moyen d'un entraînement de levage (13) vers le haut dans une position de fourrière et/ou position de transport.

6. Moissonneuse selon l'une des revendications 2 à 5, le au moins un formateur d'andain (9) réglable de façon indépendante étant conçu de façon à pouvoir être déplacé vers le haut par rapport à la faucheuse (4) latérale spécifique autour d'un axe de basculement de préférence horizontal, orienté transversalement au sens de marche au moyen d'un entraînement de basculement de course (15).

7. Moissonneuse selon les revendications 4 et 5, le au moins un formateur d'andain (9) étant articulé sur le bras porteur (11) de façon à pouvoir basculer sur le bras porteur (11) autour de l'axe de basculement (12), qui s'étend parallèlement à l'axe longitudinal du bras porteur (11).
